# EUROPEAN PATENT APPLICATION

(11) **EP 3 404 600 A1**
(43) Date of publication of application: **21.11.2018**
(21) Application number: 17382281.8
(22) Date of filing: 16.05.2017
(51) Int. Cl.: G06Q 20/00

(54) **A STRONG USER AUTHENTICATION METHOD ON NON-VIRTUAL PAYMENT DEVICES**

(71) Applicant: Financiera Espãnola de Crédito a Distancia EFC, S.A., 28050 Madrid (ES)
(72) Inventor: Alonso De Linaje García, Carlos, 28010 Madrid (ES)
(74) Representative: Carlos Hernando, Borja

(57) **Abstract**

A strong user authentication method on non-virtual payment devices,

The method comprising receiving, by a payment device (100), from a user, a phone number of a phone device (10) of said user (1), the payment device (100) further notifying a third server (101) about said phone number reception; sending, by the third server (101), to the phone device (10), an authentication confirmation message requesting a personal identification number of an identity document of the user (1); receiving, by the third server (101), said personal identification number; and receiving, by the payment device (100), from the user (1), a card identification number that associates the payment card with the user (1) upon a transaction with the payment device (100) is performed by the user (1), the payment device (101), upon said card identification number being authenticated, further notifying the third server (101) about said card identification number reception.

## Description

### Field of the art

The present invention is directed, in general, to the field of security risks relating to electronic payment transactions. In particular, the invention relates to a strong user authentication method on non-virtual payment devices to make electronic payment transactions safer.

### Background of the invention

The significant progress of legal framework on payment services and, in particular, new payment products or services has shown that developments have risen to significant challenges from a regulatory perspective.

In that context, the European Union has adopted the directive (EU) 2015/2366 for safe electronic payments of an integrated market.

In particular, the Directive defines that in order to ensure consistent application of this Directive, the Commission should be able to rely on the expertise and support of EBA, which elaborates guidelines and prepares draft regulatory technical standards on security aspects of payment services in particular with regard to strong customer authentication, i.e. an authentication based on the use of two or more elements categorized as knowledge (something only the user knows), possession (something only the user possesses) and inherence (something the user is) that are independent, in that the breach of one does not compromise the reliability of the others, and is designed in such a way as to protect the confidentiality of the authentication data.

Present invention is focused on providing a method providing the three different elements of the definition for strong user authentication in payment services.

There are known some patents or patent application in this technical field.

The international patent application WO2016172541 discloses a system for onboarding banking-account information (an onboarding transaction) to be use in future transactions includes a banking-device terminal with a card-reading device to read a banking card and input device(s) to receive a verification input associating the banking card with a banking customer. One or more secure bank computing devices receive the banking-account information and the verification input and verify the banking-account information corresponds with the verification input to authorize the onboarding transaction. When the onboarding transaction is authorized, the at-least- one secure bank-computing device requests a customer-device identification of a mobile- customer device to be used for future-banking transactions, The secure bank computing device(s) receive the customer-device identification and store account data associated with the customer-device identification, the banking-account information and/or the verification input so that they may be used for future-banking transactions. That is, this international patent application only refers to a simple authentication based on PCI-DSS.

The US patent US7533047 discloses a method and system for securing card payment transactions using a mobile communication device providing improved security in card payment transactions such as credit and debit card transactions. Upon receipt of a transaction at the card issuer or other service provider, a message is sent to a mobile communication device that has been uniquely associated with the card. The message may be an interactive message requiring response by the card owner for authorization, or may communicate a one-time-use personal identification number (PIN) with required PIN return via the point-of-sales system or the mobile communications device. In each transaction, the card issuer or service provider confirms that the communication was received and the transaction authorized by the card owner, further ensuring the authorized use of the card. The PI N and/or interactive message response period may be voided after a short time, further improving security of the transaction. That is, in this patent the authentication of the PIN is performed by sending the key to the mobile communication device via a message, therefore it is not an element only the user knows.

However, none of these prior art documents provides strong user authentication as defined in the above-mentioned Directive. New solutions to provide strong user authentication on non-virtual payment devices are therefore needed.

### Description of the Invention

Embodiments of the present invention provide a strong user authentication method on non-virtual payment devices such as a point of sale (POS) or an automated teller machine (ATM). The method comprises receiving, by a payment device, from a user, a phone number of a phone device of said user, wherein the payment device further notifies a third server about said phone number reception; sending, by the third server, to the phone device of the user, an authentication confirmation message requesting a personal identification number of an identity document (or national identification number or national identity number) of the user; receiving, by the third server, said personal identification number; and receiving, by the payment device, from the user, a card identification number that associates the payment card with the user (preferably a PCI-DSS payment card's personal identification number (PIN)) upon a transaction, e.g. a payment transaction, with the payment device is performed by the user. The payment device, upon said card identification number is authenticated, further notifies the third server about said card identification number reception.

In a preferred embodiment, the phone number is introduced by the user after the user has swiped a payment card (i.e. a debit or credit card) on the payment device.

The phone number and/or card identification number can be introduced by the user through a keypad, a touchpad or a voice interface, among others, of the payment device. That is, the user can either type the numbers on the payment device or can provide a voice command to introduce such numbers.

In an embodiment, the personal identification number is received by the third server from the user, i.e. the user responds to the authentication confirmation message (s)he has received. Alternatively, in another embodiment, the personal identification number is received by the third server from the payment device after the user has introduced the personal identification number on the payment device, for instance via a keypad or a voice interface thereof.

According to the proposed method, the authentication confirmation message may comprise a short text message, an instant message, an email message or an APP notification, among others.

Therefore, the present disclosure provides methods that can enable a secure financial transaction performed on non-virtual payment devices providing strong authentication for the user/customer.

### Brief Description of the Drawings

The previous and other advantages and features will be more deeply understood from the following detailed description of embodiments, with reference to the attached figures, which must be considered in an illustrative and non-limiting manner, in which:
Fig. 1 illustrates a conceptual illustration of the present invention and relation between the different elements.
Fig. 2 illustrates a method flow chart for strong user authentication on non-virtual payment devices.

### Detailed Description of the Invention and of Several Embodiments

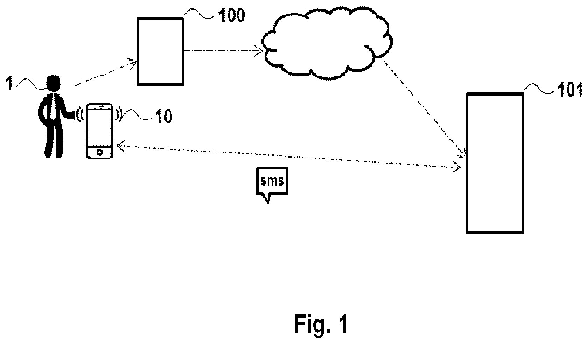

Fig. 1 shows the system concept with the different elements used by the present invention to provide a strong user authentication method. As can be seen in the figure, the system comprises a user 1 having a phone device 10, a non-virtual payment device 100 such as a POS or an ATM and a third server 101 including at least one processor and a memory. The payment device 100 and the third server 101 can communicate with each other via a communications network such as the Internet. The third server 101 can also establish communication with the phone device 10 via a messaging service, as indicated in the figure, or alternatively via an instant messaging platform via the Internet, among others.

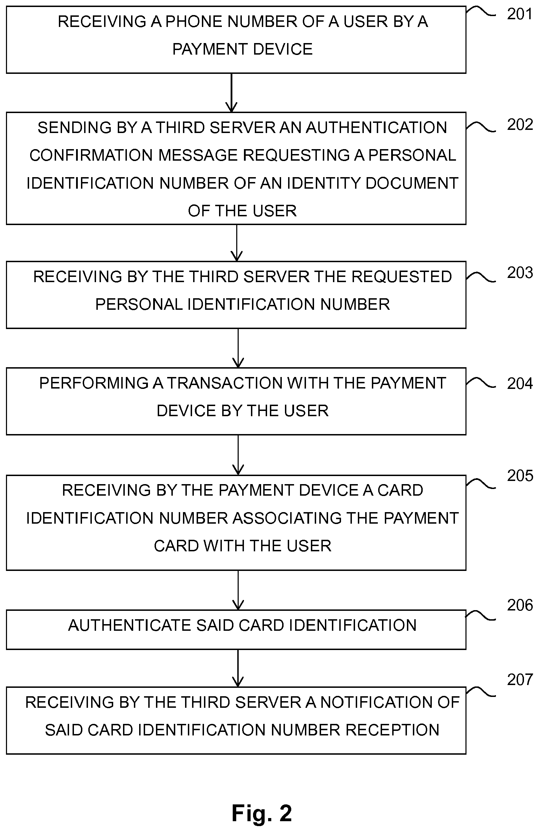

Fig. 2 shows an embodiment of the process flow to provide strong user authentication on the payment device 100. That is, to provide knowledge, possession and inherence independent elements fulfilling the above-mentioned security Directive. Preferably, according to the invention the knowledge element (i.e. something the user 1 only knowns) comprises card identification number that associates a payment card, including a credit or a debit card, with the user 1 such as a PCI-DSS payment card personal identification number (PIN), i.e. a confidence customer number provided by the Payment Card Industry ("PCI") who develops a Data Security Standard (DSS). Besides, the possession element (something only the user 1 possesses) comprises a phone number of the phone device 10, whereas the inherence element (something the user 1 is) comprises a personal identification number of an identity document of the user 1 such as the DNI number for Spanish citizens, or equivalent as used in other countries. It should be noted that other elements could be also used without departing from the scope of protection of the invention, for instance instead of using the personal identification number of an identity document of the user 1 as inherent element a biometric information of the user, such as a fingerprint, could be used.

Referring back to the process flow, according to this embodiment, at step 201, the payment device 100 receives the phone number of the user 1. This step is preferably done after the user 1 has swiped the payment card on the payment device 100. At step 202, upon the payment device 100 has notified the third server 101 about said phone number reception, preferably by having transmitted the received phone number to the third server 101, the third server 101 sends an authentication confirmation message (such as a short text message, an instant message, an email message, etc.) requesting the personal identification number of the user 1. At step 203, the third server 101 receives the requested personal identification number. This can be done by either the user 1 replying back to the received authentication confirmation message, preferably via the same messaging service/application (s)he received the message, or can be done by the user introducing the personal identification number on the payment device 100 and the latter notifying it to the third server 101. At step 204, a transaction with the payment device 100 is performed by the user 1 which involves the reception (step 205) of the card identification number by the payment device 100 from the user 1. At step 206, the card identification number is authenticated; preferably this is done by a PCI-DSS processor. Finally, at step 207, the third server 101 receives a notification of the card identification number reception from the payment device 100. Therefore, the third server 101 is in possession of the three authentication elements (knowledge, possession and inherence).

The introduction of the different elements by the payment device 100, i.e. the phone number, the card identification number and the personal identification number, if received by the payment device 100 from the user 1, can be done through a keypad, touchpad and/or voice interface, among other interfaces, of the payment device 100.

While the foregoing describes various embodiments of the invention, other and further embodiments of the invention may be devised without departing from the basic scope thereof. The scope of the present invention is defined in the following set of claims.

## Claims

1. A strong user authentication method on non-virtual payment devices, the method comprising:
a) receiving, by a payment device (100), from a user interacting with said payment device (100), a phone number of a phone device (10) of said user (1), the payment device (100) further notifying a third server (101) about said phone number reception;
b) sending, by the third server (101), to the phone device (10), an authentication confirmation message requesting a personal identification number of an identity document of the user (1);
c) receiving, by the third server (101), said personal identification number; and
d) receiving, by the payment device (100), from the user (1), a card identification number that associates the payment card with the user (1) upon a transaction with the payment device (100) is performed by the user (1), the payment device (101), upon said card identification number being authenticated, further notifying the third server (101) about said card identification number reception.

2. The method of claim 1, wherein the phone number being introduced by the user (1) after a payment card is swiped on the payment device (100).

3. The method of previous claims, wherein the personal identification number in step c) being received from the user (1) through a response to the received authentication confirmation message.

4. The method of claim 1 or 2, wherein the personal identification number in step c) being received from the payment device (100) after the user (1) having introduced the personal identification number on the payment device (100).

5. The method of claim 1, wherein at least the phone number and/or the card identification number being introduced by the user (1) through at least one of a keypad, a touchpad or a voice interface of the payment device (100).

6. The method of claim 4, wherein the personal identification number being introduced by the user (1) through at least one of a keypad, a touchpad or a voice interface of the payment device (100).

7. The method of previous claims, wherein the card identification number comprises a PCI-DSS payment card personal identification number, PIN.

8. The method of previous claims, wherein the authentication confirmation message comprises at least one of a short text message, an instant message, an email message or an APP notification.

9. The method of previous claims, wherein the payment device comprises a point of sale, POS, or an automated teller machine, ATM.
